Europäisches Patentamt

**European Patent Office**

Office européen des brevets

(19)

(11) Publication number : **0 442 662 A2**

# (12) EUROPEAN PATENT APPLICATION

(21) Application number : **91300994.0**

(22) Date of filing : **06.02.91**

(51) Int. Cl.⁵ : **B29C 53/56, B29C 65/48, B31F 1/00, B31D 3/02, A47H 23/00, E06B 9/00**

(30) Priority : **14.02.90 US 479792**

(43) Date of publication of application :
**21.08.91 Bulletin 91/34**

(84) Designated Contracting States :
**AT BE CH DE DK ES FR GB GR IT LI LU NL SE**

(71) Applicant : **HUNTER DOUGLAS INTERNATIONAL NV**
**Kaya Flamboyan 22, P O Box 3623**
**Willemstad, Curacao (AN)**

(72) Inventor : **Anderson, Richard N.**
**1572 Oak Park Drive**
**Owensboro, Kentucky 42301 (US)**

(74) Representative : **Allen, William Guy Fairfax et al**
**J.A. KEMP & CO. 14 South Square Gray's Inn**
**London WC1R 5LX (GB)**

(54) **Method and apparatus for producing continuous band expandable and collapsible shielding material.**

(57)    A method and apparatus for forming expandable and collapsible shielding material wherein adhesive is applied to one side of a flat tubular strip 10 which is wound around support rolls 24,26, the adhesive bonds together successive layers of strip to form a continuous loop 22 of stacked strip. During the winding of the strip, the strip is maintained in a flat, straight condition for a time sufficient to allow the adhesive to achieve an initial set, thereby preventing the final product from having a curved set. After the desired number of layers are wound into the loop, the loop is removed and cut through at one point to form a single, straight stacked section of definite length which is expandable and collapsible to form a shielding or insulating material having parallel hollow cells running perpendicular to the direction of expansion and collapse.

EP 0 442 662 A2

Fig.1.

## METHOD AND APPARATUS FOR PRODUCING CONTINUOUS BAND EXPANDABLE AND COLLAPSIBLE SHIELDING MATERIAL

The invention relates to a method and apparatus for producing collapsible shielding materials having parallel hollow cells running perpendicular to the direction of expansion and collapse which are often used as movable window blinds.

Such shielding materials are now well known as a means of providing a movable insulating blind for windows. Examples of such material are shown in US-E-30254 and US-A-4388354 and 4603072. While the products are known, the existing methods of producing these types of shielding materials economically and in large quantities are generally less than satisfactory.

US-A-4288485 and US-E-31129 both disclose methods for producing expandable and collapsible type insulating material, which consist basically of applying adhesive to one side of a flat, tubular strip and then winding it onto a receiving wheel or wheels to produce a loop of tubular layers which are bonded together one on top of another.

One significant problem with this method of manufacture is that the adhesive between the layers dries while the loop is being wound up in a curved state. Therefore, the resulting stack of tubular layers has a curved set, even after it is cut and pulled into a straight section. This cured set in the final product causes the resulting product to have an unattractive appearance due to warpage. The warpage is often not initially present, but shows up some time later due to the fabric memory.

US-A-4450027 and 4631108 show an alternative method and apparatus for making a similar product. But while this method has overcome the problem of the curved set, it has done so by winding the fabric onto a flat rack which requires very complicated machinery and speed control due to the constantly changing velocity of the fabric as it is wound onto the rack.

According to the present invention there is provided a method for producing continuous band shielding material, said method including the steps of providing a continuous, generally flat tubular strip, applying adhesive to the tubular strip, winding the tubular strip around first and second support means, to create a bonded loop of several layers and cutting the loop of bonded tubular strip perpendicular to the longitudinal direction of the strips to form an expandable shielding material, wherein the winding step is carried out by feeding the tubular strip material longitudinally, so that it passes around said first support means and said second support means, to form said loop ; adding each successive layer to the loop under compression at a first point (A), before the first support and after the second support ; causing the loop to pass a second point (B) on the first support and a third point (C) on the second support ; tensioning the loop between said third point (C) and said second point (B) ; maintaining the loop under tension in a flat and straight condition between said first point (A) and said second point (B) until the adhesive achieves an initial set and relaxing the tension on the loop between the first support means and the second support means.

The product of such a method does not have a curved set and therefore is free from discontinuities, warps and uneven lines associated with such a curved set.

The flattened tubular material may be formed by folding over the edges of a flat strip material, or a prefabricated tubular material with cross-sectionally closed loop can equally be used. Suitable materials include thin flexible plastics or woven and non-woven fabrics.

The invention also provides apparatus for producing continuous band expandable and collapsible shielding material, having parallel hollow cells running perpendicular to the direction of expansion and collapse, said apparatus comprising means for supplying flattened tubular strip ; means for applying adhesive to a side of the flattened tubular strip and first and second support means spaced by a predetermined distance for forming and supporting a continuous loop of successively stacked layers of the flattened tubular strip bonded together by the applied adhesive, wherein said first support means comprises at least one driven roll located a sufficient distance from a first point (A) where each successive stacked layer is added and wherein said second support means comprises a second roll, whereby the strip material is fed longitudinally of said continuous loop having a substantially flat, straight, tensioned portion of the loop extending between a point (C) on the second roll and a point (B) on the driven roll, to allow the applied adhesive to achieve an initial set, before each successive layer of the loop passes around the driven roll.

With the method and apparatus of the invention, the duration of the travel over at least part of the first portion is selected so that the adhesive which binds the strip to the outer layer of the loop, achieves at least an initial set. Thereafter, the initial set and tension reduction are controlled so that after the deflecting point of the loop, permanent displacement of the fed strip, relative to the underlying strip layer, is kept within a predetermined limit. Lastly, the stacked loop is cut in a direction approximately perpendicular to the longitudinal direction of the bonded strips after a predetermined number of layers have been bonded so as to form the shielding material.

In order that the present invention may more readily be understood, the following description is given, merely by way of example, reference being made to the accompanying drawings in which :-

Figure 1 is a schematic side view illustrating one embodiment of the method and apparatus of the present invention ;

Figure 2 is a partial enlarged side view in the area of the driven roll in one embodiment of the invention ;

Figure 3 is a cross-section of one layer of folded fabric with applied adhesive ;

Figure 4 is a schematic side view illustrating an alternative embodiment of the invention ;

Figures 5 and 6 are partial, enlarged side views of an alternative driven roll arrangement for the present invention ;

Figure 7 schematically shows side rollers and a cross-section of the loop of the invention ; and

Figure 8 is a perspective view of the honeycomb insulating material made by the present invention.

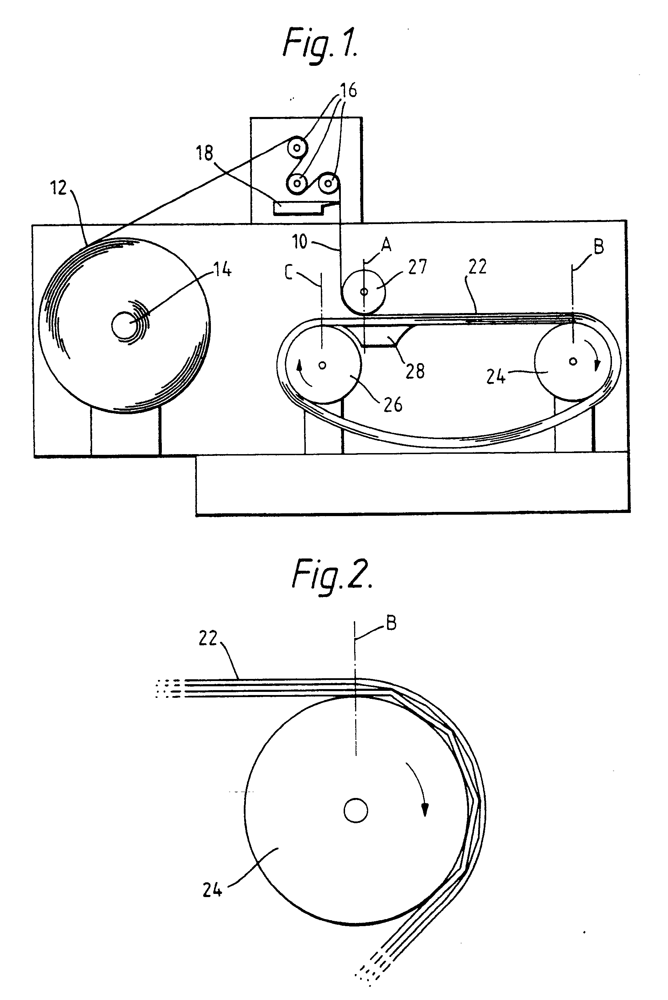

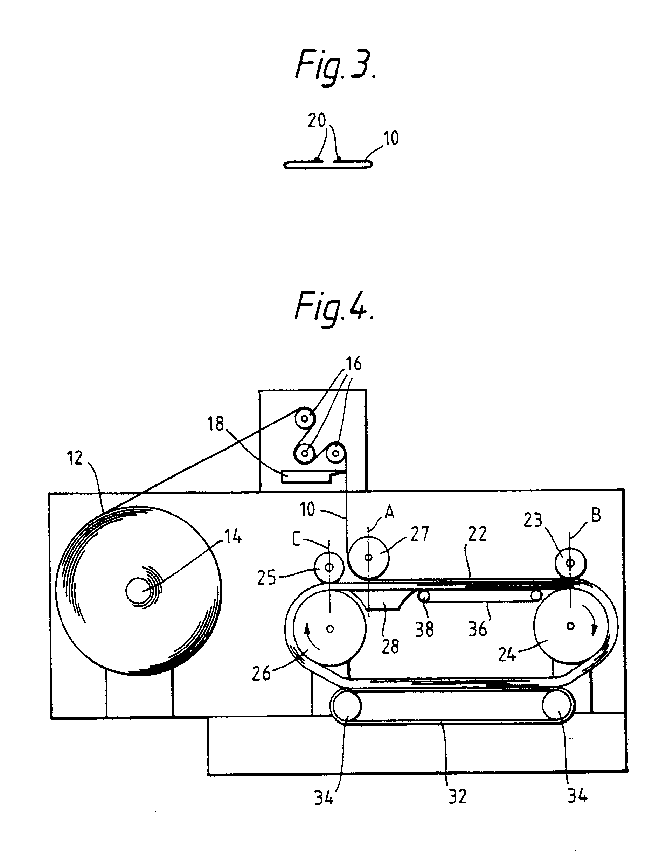

Referring to Figure 1, the flattened tubular strip 10 is supplied in the form of a flat non-tubular strip 12 from a supply reel 14. The flat strip 12 is folded and creased into a flat, generally tubular shape by a folding means 16. A suitable device for folding the flat strip 12 into the flattened tubular strip 10 is disclosed in US-A-4631108. A cross-section of the flattened tubular strip 10 is shown in Figure 3. The tube is actually an open section with the folded over edges nearly, but not actually touching. Thin flexible materials such as plastics or woven and non-woven fabrics have been found suitable as material for the flattened tubular strip 10.

In an alternative embodiment, the flattened tubular strip 10 is pre-folded and stored on reels, in which case the supply reel 14 would supply folded flattened tubular strip 10 directly to an adhesive applicator 18 without the need for the folding means 16. A third alternative in this area is to provide from the supply reel 14 a prefabricated tubular material with a cross-sectionally continuous closed loop. This also eliminates the need for the folding means 16.

Referring again to Figure 1, after the flattened tubular strip 10 is formed by the folding means 16, an adhesive applicator 18 applies adhesive to one side of the flattened tubular strip 10. Figure 3 illustrates how, in the preferred embodiment, two lines of adhesive 20 are applied close to the folded over edges of the flattened tubular strip 10. The flattened tubular strip 10, with the adhesive 20 applied, is stacked into layers by winding into a continuous loop 22. In an alternative embodiment, the adhesive 20 is applied to the outer surface of the loop 22 at a point before point (A) where the new layer is added. This is accomplished by relocating the new adhesive applicator 12, for example, in the region of point (B).

The loop 22 if formed by guiding the flattened tubular strip around the first and second supports, in the form of a driven first roll 24 and an idler second roll 26. The strip 10 is fed into the loop 22 at point (A) by passing between a pinch roll 27 and a platen 28. The strip material 10, in the loop 22, then passes around the first roll 24 and extends in an untensioned state to the second roll 26 to the point (C). A first portion of the loop, between the point (C) and the point (B) is maintained in a straight and flat condition. At the point (A) where each new layer of flattened tubular strip 10 is added, the loop 22 is compressed by squeezing it between a pinch roller 26 and a platen 28. The distance that each new layer of strip 22 travels from point (A) to point (B) is defined by the time required for the adhesive 20 to achieve an initial set and the running speed of the process, and can easily be determined by one skilled in the art using routine tests or calculations based on the specific adhesive used. With conventional adhesives, this time period is usually as long as 10-15 seconds.

In one alternative embodiment, where the adhesive applicator 18 is replaced by an ultrasonic welding apparatus, this time period is significantly decreased. In this embodiment the ultrasonic welder melts two thin lines of the flat tubular strip in the same location that the adhesive 20 wound otherwise by applied as shown in Figure 3. The melted lines of strip are then bonded to the preceding layer of flattened tubular strip 10 when it is compressed between the pinch roller 27 and platen 28. The suitable ultrasonic welding processes are very fast, the time required for setting being in the range of one tenth (1/10) of a second.

After the adhesive 20 has achieved an initial set, the loop 22 passes around the driven roll 24 which controls the winding speed of the loop 22. It is the distance (A)-(B) which determines where the driven roll 24 is located. Preferably the axis of the driven roll 24 is located vertically, directly below point (B). The driven roll may be driven by a variety of known controllable rotary power devices such as a variable speed electric motor.

After passing around the driven roll 24 and before the next layer of flattened tubular strip 10 is added, the loop 22 passes over the idler roll 26. The idler roll 26 may be equipped with an adjustable drag brake in order to adjust the tension on the upper portion of the loop 22, if necessary.

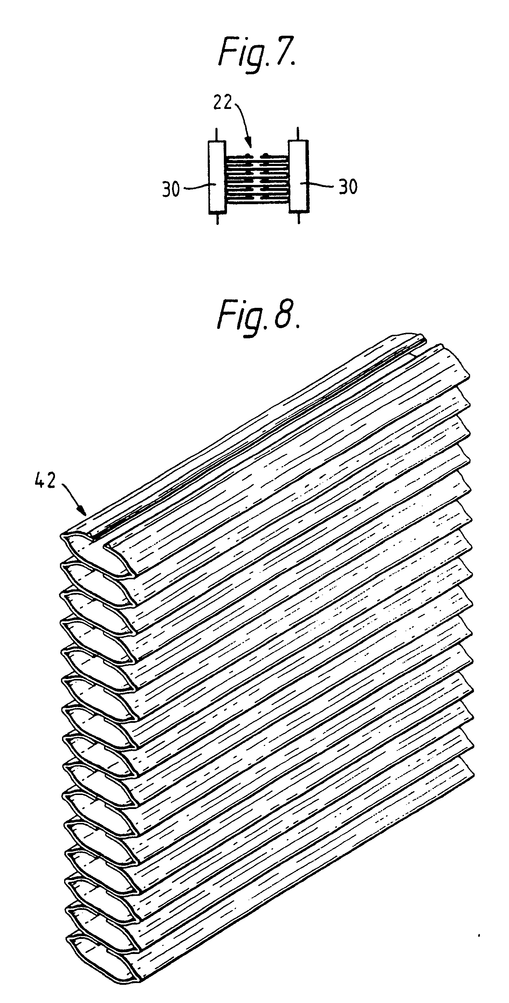

When the desired number of layers of flattened tubular strip 10 are wound onto the loop 22, the loop 22 is removed from the supporting rolls 24,26. The loop 22 is then cut at one point and straightened to form a straight stack of flattened tubular strip 10. This stack is expandable to form the honeycomb insulating material 42 shown in Figure 8.

An important feature of this method is that as the loop 22 passes around the driven roll 24, it is not under significant tension and is therefore not pulled tightly against the driven roll 24. This is illustrated in Figure 2. The momentum of the straight portion of the loop 22 tends to cause the loop to continue in a straight line after it passes point (B). This momentum force counteracts the tension in the loop 22 to prevent it from being stretched around the driven roll 24. Because the loop 22 is not stretched tightly around the driven roll 24, the outer layers of flattened tubular strip 10 are not significantly stretched as they round the curve, hence the adhesive lines 20 are not stretched as they continue to set. If the adhesive lines 20 were allowed to stretch at this point they would plasticly deform, resulting in the outer layers being slightly longer when they finally dried. This would create a curved set to the material when it was cut and straightened into a single panel of honeycomb insulating material.

The enlarged view in Figure 2 shows the condition of the loop 22 as it passes around the driven roll 24. The layers of the loop 22 are all still the same length, however, as the loop 22 travels around the curve of the driven roll 24 the outer layers need to follow a longer path than the inner layers. Because the outer layers are not stretched, as discussed above, the inner layers compensate for this difference in arc length by bunching up. This bunching does not cause a separation of the layers because the adhesive already has an initial set and the flat tubular strips 10 are expandable which allows them to fill any spaces that would otherwise be created by the bunching.

The loop 22 continues in a semi-relaxed or tension reduced state, throughout a second portion, from point (B) to point (C) where tension is reapplied due to the force induced by the driven roll 24. As the loop 22 passes around the idler roll 26, it is not pulled tightly against the idler roll because the momentum of the bottom portion of the loop 22 counteracts the tension caused by the weight of the loop 22. The loop 22 here behaves approximately in an inverted mirror image of its behaviour around the driven roll 24.

To this point a basic method and apparatus according to the invention has been described. Referring to Figure 4, certain modifications to this basic method and apparatus will now be described. The modifications disclosed are alternative embodiments which may or may not be necessary depending on particular conditions of production.

For certain applications, compression rollers 23,25 may be added to apply compression at points (B) and (C). The additional compression at these points ensures that the layers of flattened tubular strip 10 are properly adhered to provide a uniform appearance. The compression rollers 23,25 may also be used to adjust tension in the loop 22. Tension adjustments may be necessary depending on the type of material used for the flattened tubular strip 10 and the adhesive process used in order to ensure that the loop is in a relatively relaxed state as it passes around the driven roll 24 and idler roll 26.

Side rollers 30 may also be desirable in order to provide additional alignment for the stacked layers of the loop 22, as shown in Figure 7. This may be particularly important in the areas just prior to pinch roller 27, where the new layer of flattened tubular strip 10 is added, and compression roller 23, where compression is added as or just after the adhesive 20 achieves its initial set.

It may be helpful to support the underside or second portion of the loop 22, especially when the number of stacked layers required is large or the material used is relatively heavy. This compensates for the additional weight of the loop 22 which would cause the loop to be stretched tightly around the driven roll 24 and idler roll 26, resulting in the undesirable stretching of the adhesive line 20 discussed above. This supporting means for the underside second portion of the loop 22 may be an endless belt 32, as illustrated in fig 4. Belt 32 is mounted on rollers 34 which supports the underside of the loop 22. Other supporting means are possible such as a metal tray along which the loop could slide with relatively low friction.

If the distance required between points (A) and (B) is relatively large in order to allow sufficient time for an initial set to be achieved by the adhesive 20, it may be necessary to provide support for the upper side or first portion of the loop 22 in order to prevent sagging while the adhesive sets. A supporting belt 36 may be added between the platen 28 and just before point (B), or alternatively, the supporting belt 36 could extend to under point (A) and thereby replace the platen 28. The supporting belt 36 would be an endless belt slightly wider than the width of the loop 22 and would run on rollers 38.

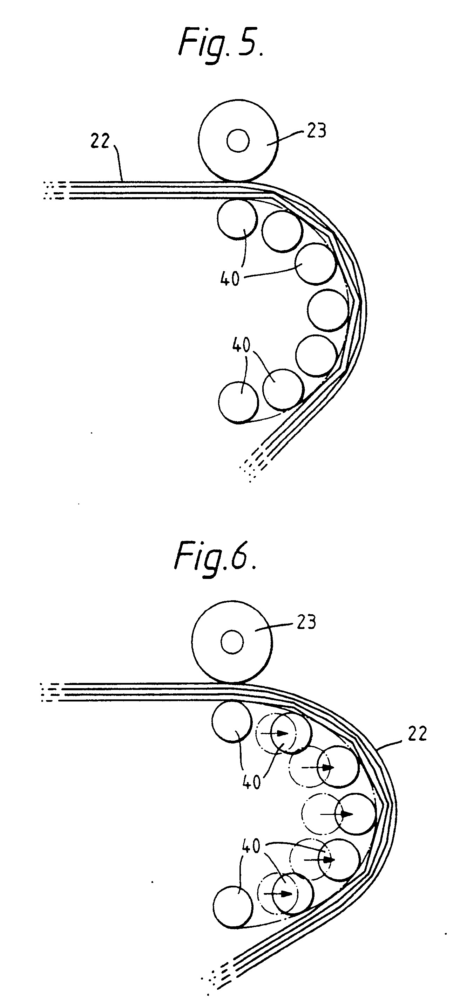

An additional modification to the basic process and apparatus is illustrated in Figures 5 and 6. In this embodiment, instead of a single large driven roll 24, a series of smaller adjustable rolls 40 are used. These rolls 40 can be adjusted to conform to the shape of the loop 32 as it becomes distorted during the running of the process. Due to the momentum of the upper side of the loop 22 as it passes around the driven roll 24 will change. Instead of the simple circular curve which is generated at low speeds, a complex curve is created, which curve starts with a parabolic arc, transitioning into a short circular arc and then back to a parabolic arc, before finally changing into a shape approximating the long side of an ellipse as the loop 22 moves toward bottom centre. The series of small adjustable rolls 40 are controlled by a positioning means (not shown) such as hydraulic cylinders or electromechanical controllers. As the shape of the loop 22 changes due to speed variations or increased mass of the loop 22 the small adjustable rolls 40 can be positioned to adapt to this shape change, as shown in Figure 6.

As noted above, these adjustable rolls 40 are especially useful when the process is to be run at high speed, since the loop 22 will be more difficult to control due to increased dynamic forces. The adjustable rolls 40 also provide additional control of the loop 22 by closely approximating its shape. The adjustable rolls 40 have further utility to approximate the high speed shape of the loop 22 during start up of the process. This eliminates unwanted shape changes in the loop 22 as speed and mass increase to avoid control problems.

It should be understood that the sequence of steps disclosed above are not necessarily the required sequence. The methods illustrated are the preferred embodiments, however, the sequence of the steps may be altered in some cases, with the only requirement being that all steps are ultimately included.

## Claims

1. A method for producing continuous band shielding material, said method including the steps of providing a continuous, generally flat tubular strip (10), applying adhesive (20) to the tubular strip, winding the tubular strip around first and second support means (24,26), to create a bonded loop (22) of several layers and cutting the loop of bonded tubular strip perpendicular to the longitudinal direction of the strips to form an expandable shielding material, characterised in that the winding step is carried out by feeding the tubular strip material (10) longitudinally, so that it passes around said first support means (24) and said second support means (26), to form said loop (22) ; adding each successive layer to the loop under compression at a first point (A), before the first support (24) and after the second support (26) ; causing the loop to pass a second point (B) on the first support (24) and a third point (C) on the second support (26) ; tensioning the loop between said third point (C) and said second point (B) ; maintaining the loop (22) under tension in a flat and straight condition between said first point (A) and said second point (B) until the adhesive achieves an initial set and relaxing the tension on the loop between the first support means (24) and the second support means (26).

2. A method according to claim 1, characterised in that the first support means (24) is a driven roll and the second support means (26) is an idler roll.

3. A method according to claim 1 or 2, characterised in that the loop (22) is supported between said first point (A) and said second point (B).

4. A method according to claim 1, 2 or 3, characterised in that the strip (40) is positively fed to said first point (A).

5. A method according to any preceding claim, characterised in that said strip has compression applied to it at at least one of second and third point (B, C) of said loop.

6. A method according to any preceding claim, characterised in that the adhesive (20) is applied to the strip (10) either before said strip is fed to said first point (A) or between said third point (C) and said first point (A) of said loop.

7. Apparatus for producing continuous band expandable and collapsible shielding material, having parallel hollow cells running perpendicular to the direction of expansion and collapse, said apparatus comprising means (14,16) for supplying flattened tubular strip ; means (18) for applying adhesive to a side of the flattened tubular strip and first and second support means (24,26) spaced by a predetermined distance for forming and supporting a continuous loop (22) of successively stacked layers of the flattened tubular strip bonded together by the applied adhesive, characterised in that said first support means comprises at least one driven roll (24,40) located a sufficient distance from a first point (A) where each successive stacked layer is added and in that said second support means (26) comprises a second roll, whereby the strip material (10) is fed longitudinally of said continuous loop (22) having a substantially flat, straight, tensioned portion of the loop extending between a point (C) on the second roll (26) and a point (B) on the driven roll (24,40), to allow the applied adhesive to achieve an initial set, before each successive layer of the loop passes around the driven roll (24,40).

8. Apparatus according to claim 7, characterised in that the means for supplying the flattened tubular strip further comprise a platen (26) placed within the loop under said first point (A), and a pinch roll (27) around which the strip material (10) is passed, the strip material extending between said pinch roll (27) and said platen (26).

9. Apparatus according to claim 7 or 8, characterised in that said driven roll comprises a plurality of driven rolls (40) and means to urge said rolls selectively in a direction away from said second roll (26).

10. Apparatus according to claim 7, 8 or 9, characterised in that the untensioned portion of said loop (22) between said driven roll (24,40) and said second roll (26) is supported on a support such as an endless belt (32).

11. Apparatus according to any one of claims 7 to 10, characterised in that a supporting belt (36) is provided to support that portion of the loop (22) between the first and second points (A, B).

12. Apparatus according to any one of claims 7 to 11, characterised in that pinch rolls (23,25) are associated with said driven roll (24) and said idler roll (26), the loop passing between said pinch rolls and said driven roll (24) and said second roll (26) respectively.

13. Apparatus according to any one of claims 7 to 12, characterised in that said second roll is an idler roll and means are provided to brake said idler roll.

*Fig.1.*

*Fig.2.*

Fig. 3.

Fig.4.

## Fig. 5.

## Fig.6.

# Fig.7.

# Fig.8.